# EUROPEAN PATENT SPECIFICATION

(11) **EP 1 650 243 B1**
(45) Date of publication and mention of the grant of the patent: **30.01.2008**
(21) Application number: 05021978.1
(22) Date of filing: 08.10.2005
(51) Int. Cl.: C08G 18/78, C08G 18/79, C08G 18/80

(54) **Biuretized polyisocyanates and blocked biuretized polyisocyanates**
Biuretisierte Polyisocyanate und blockierte, biuretisierte Polyisocyanate
Polyisocyanates ayant une structure de biuret et ces polyisocyanates bloqués

(30) Priority: 21.10.2004 US 970763
(43) Date of publication of application: 26.04.2006
(73) Proprietor: Bayer MaterialScience LLC, Pittsburgh PA 15205 (US)
(72) Inventor: Roesler, Richard R., Wexford, PA 15090-7583 (US); Berezkin, Yuliya, Pittsburgh, PA 15241 (US); Kinney, Carol L., Eighty Four, PA 15330-0583 (US); Martin, Kyli, Bridgeville, PA 15017-1097 (US); Shaffer, Myron W., New Cumberland, WV 26047-9769 (US)
(74) Representative: Klimiuk, Meike

(56) References cited:
- EP-A- 1 524 284
- WO-A-03/025040
- US-A- 4 220 749

## Description

### BACKGROUND OF THE INVENTION

The biuretization of isocyanates is known in the art. U.S. patents 3,903,127 and 3,976,622 describe a variety of different biuretizing agents, including primary aliphatic amines. Canadian published application 2,211,025 describes the use of tertiary alcohols or a mixture of water and a tertiary alcohol to biuretize an isocyanate. Finally, U.S. patent 4,220,749 describes the use of secondary monoamines as biuretizing agents. All three references describe the use of hexamethylene diisocyanate as the starting isocyanate. U.S. patent 4,788,262 suggests biuretizing a trimer of hexamethylene diisocyanate, but only exemplifies a mixture of trimers and biurets (see also U.S. patent 6,133,397),

The use of polyisocyanates curing agents for coating compositions is also known, with polyisocyanates having isocyanate functionalities of 3 or higher being particularly preferred. U.S. Patent Application Publication 2003/0109664 describes the production of a higher functional polyisocyanate by biuretizing an isocyanaurate-group containing polyisocyanate. Among the starting isocyanates described is a trimer of hexamethylene diisocyanate. The biuretizing agent used is water. The application indicates that when compared to isocyanates biuretized with t-butanol or a mixture of t-butanol and water, the trimer-containing isocyanates biuretized with water only, exhibited improved color. The application also broadly suggests that the isocyanate groups of biuretized isocyanates can be blocked with alcohols, ketimines or oximes. Although the biuretized isocyanates described in the application are an improvement over the prior art biuretized isocyanates, it would be desirable to improve the gel content and mar resistance of coatings prepared from such isocyanates.

A wide variety of blocking agents are known in the art (see, e.g., "Blocked Isocyanates in Coatings," Potter et al, presented at the WaterBorne & Higher-Solids Coatings Symposium, New Orleans, February 1986. Among the blocking agents described are i) phenol, cresols and long aliphatic chain substituted phenols (such as isononylphenol), ii) amides (such as ε-caprolactam), iii) oximes (such as butanoneoxime), iv) active methylene group-containing compounds (such as malonates and aectoacetates) and v) sodium bisulfite. Various blocking agents are also described, e.g., in U.S. patents 4,324,879, 4,439,593, 4,495,229, 4,518,522, 4,667,180, 5,071,937, 5,705,593, 5,780,541, 5,849,855, 6,051,675, 6,060,573, 6,274,693, 6,368,669 and 6,583,216.

More recently, secondary amines such as N-benzyl-tert-butylamine (published European patent application 1,375,549, corresponding to U.S. patent application serial number 10/459,033, filed on June 10, 2003) and 3-tert-butylamino methyl proprionate (U.S. application serial number 10/874,716, filed June 23, 2004) have been described as useful blocking agents.

### DESCRIPTION OF THE INVENTION

The present invention is directed to a biuret group-containing polyisocyanate composition having an isocyanate functionality of at least 4 prepared by a process comprising reacting a polyisocyanate adduct which
a) is prepared from an aliphatic and/or cycloaliphatic diisocyanate;
b) has an average isocyanate functionality of at least 2.5, and
c) which contains isocyanurate groups,
with a secondary monoamine at an isocyanate to amine equivalent ratio of from about 4:1 to about 14:1 to incorporate biuret groups into said polyisocyanate.

The invention is also directed to a blocked biuret group-containing polyisocyanate composition having an isocyanate functionality of at least 4 prepared by a process comprising
A) reacting a polyisocyanate adduct which
   a) is prepared from an aliphatic and/or cycloaliphatic diisocyanate;
   b) has an average isocyanate functionality of at least 2.5, and
   c) which contains isocyanurate groups,
      with a secondary monoamine at an isocyanate to amine equivalent ratio of from about 4:1 to about 14:1 to incorporate biuret groups into said polyisocyanate, and
B) reacting the biuret-containing polyisocyanate with a blocking agent.
   Suitable starting polyisocyanates for preparing the polyisocyanates of the present invention are polyisocyanate adducts which
   a) are prepared from aliphatic and/or cycloaliphatic diisocyanates, preferably aliphatic diisocyanates and more preferably 1,6-hexamethylene diisocyanate;
   b) have an average isocyanate functionality of at least 2.5, preferably at least 2.8 and more preferably at least 3.0; and
   c) contain isocyanurate groups.
   The starting polyisocyanate adducts preferably have an NCO content of 10 to 25% by weight, more preferably 12 to 25% by weight and most preferably 15 to 25% by weight; and preferably have an upper limit of isocyanate functionality of 8, more preferably 7 and most preferably 6. The starting material to prepare the polyisocyanate adducts preferably contains at least 70% by weight, more preferably at least 80% by weight and most preferably at least 90% by weight of an aliphatic diisocyanate, and most preferably 1,6-hexamethylene diisocyanate.

Starting polyisocyanate adducts containing isocyanurate groups are known and may be prepared in accordance with the teachings of U.S. patent 4,324,879, herein incorporated by reference. In the present invention, these adducts are generally preferred as the starting materials. Useful examples of such polyisocyanate adducts containing isocyanurate groups are trimers formed from an aliphatic and/or cycloaliphatic diisocyanate. Trimers of aliphatic diisocyanates, such as the trimer of 1,6-hexamethylene diisocyanate which is sold under the tradename Desmodur N3390, from Bayer Polymers LLC, are most preferred.

Substantially any aliphatic and/or cycloaliphatic diisocyanate can be used to form the starting polyisocyanate adduct. Useful diisocyanates include, without limitation, 1,6-hexamethylene diisocyanate, bis-cyclohexyl diisocyanate, 1,4-cyclohexyl diisocyanate, bis-(4-isocyanatocyclohexyl)-methane, 3-isocyanatomethyl-3,5,5-trimethylcyclohexylisocyanate ("isophorone diisocyanate") and the like.

To prepare the polyisocyanates containing biuret groups according to the present invention the starting polyisocyanate adducts are reacted in the presence of a secondary monoamine as a biuretizing agent. The preparation of biuretized isocyanates using secondary monoamines is described in U.S. patents 4,220,749, the disclosure of which is hereby incorporated by reference. In general, the secondary amines are of the general formula: (R₁)(R₂)NH, where R₁ and R₂ may be the same or different and represent an aliphatic hydrocarbon radical containing from 1 to 20 carbon atoms. Specific useful secondary monoamines include dimethylamine, diethylamine, dipropylamine, dibutylamine, bis-(2-ethylhexyl)-amine. The isocyanate and amine are reacted at an isocyanate to amine equivalent ratio of from about 4:1 to about 14:1 to incorporate biuret groups into said polyisocyanate. The reaction is carried out at a temperature of from about 0 to 140°C, preferably 60 to 160°C and more preferably 70 to 140°C.

The resulting polyisocyanate has an isocyanate functionality_which is generally at least 4, preferably at least 4.5 and more preferably at least 4.8 and has an NCO content of from about 8 to about 24% by weight, preferably from about 10 to about 22% by weight and more preferably from about 10 to about 20% by weight, based on the weight of the polyisocyanate. The resulting polyisocyanates preferably have a maximum isocyanate functionality of 10, more preferably 8 and most preferably 7. The products can be suitably reduced in solvent for use.

The molecular weight of the product is calculated by GPC using polystyrene as the standard. The resulting biuret-group containing polyisocyanate generally has a number average molecular weight of from about 500 to about 10,000, preferably from about 500 to about 5,500 and most preferably from about 500 to about 3,000.

Using the process of the invention, the biuret group-containing polyisocyanate can be prepared either continuously or batchwise.

The products obtained by this process are distinguished in particular in that they couple comparatively low viscosity and low molecular weight with a high isocyanate functionality and a high reactivity with respect to binders employed in coatings, said binders containing isocyanate-reactive groups and being, for example, hydroxyl-containing polyacrylates. Other advantages are that they are easy to prepare, the content of volatile isocyanates do not rise even on prolonged storage as these compounds are stable to breakdown to monomer, they contain standard isocyanate groups which do not require additional regulatory clearance, and that the products are storage stable with respect to viscosity increases and are substantially colorless, which is especially important for clear coat systems.

The products obtained by the process are particularly suitable as curing agents in coating compositions, especially in automotive coatings. In such applications, the products may be used as is or may be blocked with any of the conventional blocking agents. Such products are also a part of this invention.

Typical blocking agents include i) phenol, cresols and long aliphatic chain substituted phenols (such as isononylphenol), ii) amides (such as ε-caprolactam and δ-valerolactam), iii) oximes (such as butanoneoxime, formaldoxime, acetophenone oxime, benzophenone oxime, diethylglyoxime and methyl ethyl ketoxime), iv) hydrazones such as methyl ethyl hydrazone and v) pyrazoles such as dimethyl pyrazole. Blocking agents are normally employed when formulating one-pack coatings.

The coating compositions of this invention generally contain a film forming binder which comprises an isocyanate-reactive oligomer or polymer or dispersed gelled polymer, and a blocked or unblocked biuret group-containing polyisocyanate curing agent as described above.

The coating compositions of this invention preferably are formulated into one- or two-pack liquid solvent borne or water borne coating compositions. Although the compositions are preferably liquid coating compositions, they may be formulated into powder coating compositions as well.

The coating compositions of this invention are particularly useful for finishing the exterior of automobile and truck bodies. Depending on its use, the present composition is capable of providing a coating which is durable, is fast curing, has excellent adhesion to previously painted substrates, has superior crosslinking and excellent resistance to chemical attack and environmental weathering, and imparts a superior glossy appearance for an extended period.

When the present composition is used as a solvent borne coating, the biuret-containing polyisocyanates described above are particularly useful in formulating fast curing low VOC high solids solvent borne clearcoat compositions for clear coat/color coat finishes for automobiles and trucks. The inclusion of compact, highly functional, biuret group-containing polyisocyanate curing agent of low viscosity results in: increased cure rate of the coating and improved productivity; superior crosslinking; improved resistance to chemical attack and environmental weathering; and low VOC formulations, since these biurets have high isocyanate functionality without forming high molecular weight and high viscosity materials, which would require further dilution with solvents for spraying and thereby increase the VOC content of the composition.

As indicated above, the coating composition is particularly suited for use as a clear coat in automotive refinishing and finishing but can be pigmented with conventional pigments and used as a monocoat or as basecoat or even as an undercoat such as a primer or sealer. These coatings may also be used in nonautomotive applications such as in industrial and architectural applications.

A particular advantage of the isocyanates (both blocked and unblocked) of the present invention is that the coatings prepared therefrom exhibit improved cure as shown by increased gel content at lower cure temperatures when compared to similar products made from biuretized isocyanates where water is used as the biuretizing agent.

In the examples which follow, all parts and per cents are by weight unless otherwise indicated and the following materials were used:
DESMO 800 - Desmophen 800 - a polyester with OH content of 8.8%, 100% solids and viscosity of about 170,000 cps, available from Bayer MateriaIScience.
CGL - CGL-052 L2 - an hydroxyl functional triazine based hindered amine light absorber from Ciba Specialty Chemicals, supplied at 60% solids in PM acetate (propylene glycol momomethylether acetate).
T-12 - Dabco T-12 - dibutyltin dilaurate - available from Air Products.
T-928 - Tinuvin 928 - hydroxyphenyl benzotriazole based UV-absorber from Ciba Specialty Chemicals.
BYK-370 - a 25% solids solution of a hydroxy functional, polyester modified dimethylpolysiloxane in xylene/cyclohexanone/2-phenoxyethanol/naphtha (75:7:7:1), supplied by Byk-Chemie and designed for substrate wetting.
n-BA/PMA/EEP - a 4:5:6 blend of n-butyl acetate (CAS# 123-86-4), PM acetate (CAS# 108-65-6, also known as propylene glycol monomethyl ether acetate) and Ektapro EEP from Eastman (CAS# 763-69-9, also known as ethyl 3-etholypropionate).

### EXAMPLES

In the examples which follow, Examples 1, 3 and 5 are comparative examples.
Polyiso 1 - Into a five liter round bottom flask fitted with stirrer, nitrogen inlet, thermocouple and heater was added 2500 parts (12.88 eq) of Desmodur N-3300 polyisocyanate (a solvent-free hexane diisocyanate trimer having an NCO content of about 22% by weight and a viscosity of about 2500 mPa·s at 25°C, available from Bayer MateriaIScience), 700 parts of butyl acetate, 5 parts of dibutyl phosphate catalyst and 297 parts (2.30 eq) of N,N-dibutyl amine and mixed until homogenous. The reaction was heated for one hour at 65°C, then for one half hour at 90°C, then for five hours at 120°C, and finally for two hours at 140°C. At the end of the heating period, the reaction was cooled to room temperature. The isocyanate content was 10.5% by weight (10.0% theoretical). The viscosity at 25°C was 1,980 cps. Functionality was approximately six isocyanate groups per molecule.
Polyiso 2 -Into a five liter round bottom flask fitted with stirrer, nitrogen inlet, thermocouple and heater was added 2550 parts (13.14 eq) of Desmodur N 3300 polyisocyanate, 450 parts of butyl acetate, 0.128 parts of dibutyl phosphate catalyst and 16.60 parts (0.92 eq) of distilled water and mixed until homogenous. The reaction was heated for one hour at 65°C, then for one half hour at 90°C, then for one half hour at 120°C, and finally for seven hours at 140°C. At the end of the heating period, the reaction was cooled to room temperature. The isocyanate content was 14.52% by weight (14.16% theoretical). The viscosity at 25°C was 6,800 cps. Functionality was approximately six isocyanates groups per molecule.

Blocked ISO 1 - Into a two liter round bottom flask fitted with stirrer, nitrogen inlet, thermocouple, heater and addition funnel were added 321 parts (0.80 eq) of Polyiso 1 and 245.8 parts of butyl acetate were combined in the flask and mixed until homogenous. 83 parts (0.86 eq) of dimethyl pyrazole and 211.5 parts of butyl acetate were added alternatively in portions over a thirty minute period. The temperature rose to 35°C. The heater was turned on and the temperature increased to 70°C. After four hours at 70°C, no NCO groups could be detected by IR. The viscosity at 20°C was 226 cps. The density was 8.52 lbs/gal. The calculated equivalent weight was about 1077.
Blocked ISO 2 - The procedure was the same as for Blocked ISO 1, except that 303.8 parts (0.76 eq) of Polyiso 1, 93.2 parts (1.92 eq) of ε-caprolactam and 175.5 parts of butyl acetate were used. The ε-caprolactam was used instead of the dimethyl pyrazole used for Blocked ISO 1.The viscosity at 25°C was 294 cps. The density was 8.61 lbs/gal. The calculated equivalent weight was 554.
Blocked ISO 3 - In this isocyanate, the blocking agent was methyl ethyl ketoxime. The procedure was the same as for Blocked ISO 1 except that 301.3 parts (0.75 eq) of Polyiso 1, 67.1 parts (0.77 eq) of methyl ethyl ketoxime and 206 parts of butyl acetate were used. The viscosity at 25°C was 177 cps. The density was 8.24 lbs/gal. The calculated equivalent weight was 750.
Blocked ISO 4 - Into a two liter round bottom flask fitted with stirrer, nitrogen inlet, thermocouple, heater and addition funnel were added 418.0 parts (1.70 eq) of Polyiso 2 and 100.6 parts of butyl acetate. The materials were mixed until homogenous. 195.8 parts (2.04 eq) of dimethyl pyrazole and 208.4 parts of butyl acetate were added alternatively in portions over a thirty minute period. The temperature rose to 35°C. The heater was turned on and the temperature increased to 62°C. After two and one half hours at 62°C, no NCO groups could be detected by IR. The viscosity at 20°C was 110 cps. The density was 8.26 lbs/gal. The calculated equivalent weight was 466.
Blocked ISO 5 - The procedure was the same as for Blocked ISO 4 except that 462.8 parts (1.60 eq) of Polyiso 2, 217.3 parts (1.92 eq) of ε-caprolactam and 384.0 parts of butyl acetate were used. The viscosity at 25°C was 333 cps. The density was 8.63 lbs/gal. The calculated equivalent weight was 554.
Blocked ISO 6 - The procedure was the same as for Blocked ISO 4 except that 491.7 parts (1.70 eq) of Polyiso 2, 177.7 parts (2.04 eq) of methyl ethyl ketoxime and 372.6 parts of butyl acetate were used. The viscosity at 25°C was 302 cps. The density was 8.22 lbs/gal. The calculated equivalent weight was 511.

Table 1 below sets forth the coating compositions tested and Tables 2 through 5 set forth the results obtained therefrom. The compositions were applied using a Binks 95 type siphon gun to a wet film build of approximately 4 mils. After flashing for 15 minutes, the panels were cured according to their desired temperature ranges.

The tests conducted were the following:
MEK Double Rubs: a 2 pound ball peen hammer is wrapped with several layers of cheesecloth. The cloth is saturated with MEK. The hammer is placed at a 90 degree angle to the surface and moved back and forth over a 4" area. The cloth is re-saturated with MEK every 25 rubs. The test is run until the coating is damaged or until 200 rubs are reached. The number of rubs needed for coating damage is recorded.
Gel Content: Coating free films of a known weight are placed in stainless steel wire screens. These are then placed in boiling acetone for 7 hours to remove any extractable materials. The coating films are then re-weighed to determine and report total weight solids retention.
Pendulum Hardness: Coated glass panels are placed on a Koenig Pendulum Hardness tester and the number of swings of the pendulum before its angle of deflection becomes too low is recorded. All coatings are compared to the hardness of glass (172-185 swings).
Scratch and Mar: Run on an Atlas AATCC crockmeter, model CM-5. A wool felt cloth (Atlas 14-9956-00) was placed directly on the acrylic finger. Bon Ami cleanser was then applied to the coated panel and excess tapped off. Ten back and forth rubs were done on the coated panel followed by washing and drying of the panel. Mar resistance was determined by percentage retention of 20 gloss when read perpendicular to direction of rubs.

**Table 1**

| Example | **1** | **2** | **3** | **4** | **5** | **6** |
|---|---|---|---|---|---|---|
| Blocked Iso | 4 | 1 | 5 | 2 | 6 | 3 |
| pbw, blocked iso | 393.57 | 476.36 | 412.13 | 477.65 | 428.79 | 497.1 |
| pbw, Desmo 800 | 155.72 | 121.83 | 148.6 | 118.38 | 142.57 | 122.03 |
| pbw, T-12 | 3.92 | 3.98 | 3.96 | 4 | 4 | 3.9 |
| pbw, CGL | 6.53 | 6.63 | 6.6 | 6.66 | 6.66 | 6.44 |
| pbw, T-928 | 39.19 | 39.76 | 39.59 | 39.95 | 39.98 | 38.95 |
| pbw, Byk-370 | 29.04 | 29.46 | 29.33 | 29.6 | 29.63 | 4 |
| pbw, n-BA/PMA/EEP | 201.63 | 163.8 | 197.88 | 169.58 | 194.86 | 156.39 |

**Table 2**

| Example | 1 | 2 | 3 | 4 | 5 | 6 |
|---|---|---|---|---|---|---|
| Cure temp, °F, double rubs | | | | | | |
| 235 | tacky | 79 | | 10 | | 30 |
| 245 | tacky | 96 | | 39 | | 25 |
| 248 | | | | | | |
| 250 | | | 25 | | | |
| 255 | 128 | 117 | | 62 | | 65 |
| 260 | | | 25 | | | |
| 265 | 172 | 83 | | 105 | | 84 |
| 270 | | | 75 | | | |
| 275 | 147 | 142 | | 164 | | 76 |
| 280 | | | 144 | | | |
| 290 | | | 163 | | | |
| 295 | | | | | 5 | |
| 305 | | | | | 25 | |
| 315 | | | | | 27 | |
| 325 | | | | | 191 | |
| 335 | | | | | 170 | |

**Table 3**

| Example | 1 | 2 | 3 | 4 | 5 | 6 |
|---|---|---|---|---|---|---|
| Cure temp, °F, gel | | | | | | |
| 235 | 83 | 79.1 | | 25.3 | | 57.9 |
| 245 | 89.6 | 90.6 | | 91.3 | | 48.4 |
| 248 | | | | | | |
| 250 | | | 28 | | | |
| 255 | 99.3 | 94 | | 91.7 | | 77.6 |
| 260 | | | 71 | | | |
| 265 | 99 | 96.9 | | 96.3 | | 93.8 |
| 270 | | | 89.1 | | | |
| 275 | 99.7 | 98.4 | | 97.8 | | 95.1 |
| 280 | | | 100 | | | |
| 290 | | | 100 | | | |
| 295 | | | | | tacky | |
| 305 | | | | | 0.3 | |
| 315 | | | | | 73.3 | |
| 325 | | | | | 100 | |
| 335 | | | | | 100 | |

**Table 4**

| Example | 1 | 2 | 3 | 4 | 5 | 6 |
|---|---|---|---|---|---|---|
| Cure temp, °F, hard | | | | | | |
| 235 | 7 | 7 | | 1 | | 2 |
| 245 | 9 | 16 | | 10 | | 2 |
| 248 | | | | | | |
| 250 | | | tacky | | | |
| 255 | 75 | 32 | | 19 | | 5 |
| 260 | | | tacky | | | |
| 265 | 74 | 58 | | 30 | | 36 |
| 270 | | | 31 | | | |
| 275 | 76 | 54 | | 66 | | 24 |
| 280 | | | 52 | | | |
| 290 | | | 87 | | | |
| 295 | | | | | tacky | |
| 305 | | | | | tacky | |
| 315 | | | | | 6 | |
| 325 | | | | | 100 | |
| 335 | | | | | 79 | |

**Table 5**

| Example | 1 | 2 | 3* | 4 | 5 | 6 |
|---|---|---|---|---|---|---|
| Cure temp, °F, scratch | | | | | | |
| 175 | | | | | | |
| 194 | | | | | | |
| 212 | | | | | | |
| 230 | | | | | | |
| 235 | tacky | 96 | | 13 | | 92.7 |
| 245 | 58.2 | 93.2 | | 97.8 | | 91.8 |
| 248 | | | | | | |
| 255 | 89.4 | 88.4 | | 100 | | 95.7 |
| 265 | 90.7 | 91.1 | | 99.5 | | 100 |
| 275 | 93.1 | 91 | | 100 | | 100 |
| 295 | | | | | tacky | |
| 305 | | | | | tacky | |
| 315 | | | | | 17.6 | |
| 325 | | | | | 88 | |
| 335 | | | | | 82 | |

| | | | | | | |
|---|---|---|---|---|---|---|
| *not tested | | | | | | |

## Claims

1. A biuret group-containing polyisocyanate composition having an isocyanate functionality of at least 4 prepared by a process comprising reacting a polyisocyanate adduct which
a) is prepared from an aliphatic and/or cycloaliphatic diisocyanate,
b) has an average isocyanate functionality of at least 2.5, and
c) which contains isocyanurate groups,
with a secondary monoamine at an isocyanate to amine equivalent ratio of about 4:1 to about 14:1 to incorporate biuret groups into said polyisocyanate.

2. The composition of Claim 1, wherein said adduct has an average isocyanate functionality of at least 2.8 and no more than 8.

3. The composition of Claim 2, wherein said adduct has an average isocyanate functionality of at least 3.0 and no more than 6.

4. The composition of Claim 1, wherein said adduct has an NCO content of from 10 to 25% by weight.

5. The composition of Claim 1, wherein component a) is an aliphatic diisocyanate.

6. The composition of Claim 1, wherein said monoamine is of the formula:
(R₁)(R₂)NH,
wherein R₁ and R₂ may be the same or different and represent an aliphatic hydrocarbon radical containing form 1 to 20 carbon atoms.

7. The composition of Claim 6, wherein said monoamine is dibutylamine.

8. A blocked biuret group-containing polyisocyanate composition having an isocyanate functionality of at least 4 prepared by a process comprising
A) reacting a polyisocyanate adduct which
a) is prepared from an aliphatic and/or cylcoaliphatic diisocyanate,
b) has an average isocyanate functionality of at least 2.5, and
b) which contains isocyanurate groups,
with a secondary monoamine at an isocyanate to amine equivalent ratio of about 4:1 to about 14:1 to incorporate biuret groups into said polyisocyanate, and
B) reacting the biuret-containing polyisocyanate with a blocking agent.

9. The composition of Claim 8, wherein said adduct has an average isocyanate functionality of at least 2.8 and no more than 8.

10. The composition of Claim 9, wherein said adduct has an average isocyanate functionality of at least 3.0 and no more than 6.

11. The composition of Claim 8, wherein said adduct has an NCO content of from 10 to 25% by weight.

12. The composition of Claim 8, wherein component a) is an aliphatic diisocyanate.

13. The composition of Claim 8, wherein said monoamine is of the formula:
(R₁)(R₂)NH,
wherein R₁ and R₂ may be the same or different and represent an aliphatic hydrocarbon radical containing form 1 to 20 carbon atoms.

14. The composition of Claim 13, wherein said monoamine is dibutylamine.

15. The composition of Claim 8, wherein said blocking agent is selected from the group consisting of phenol, cresol, long aliphatic chain substituted phenols, amides, oximes, hydrazones, and pyrazoles.

16. The composition of Claim 15, wherein said blocking agent is selected from the group consisting of dimethyl pyrazole, ε-caprolactam and methyl ethyl ketoxime.

## Patentansprüche

1. Biuretgruppen enthaltende Polyisocyanat-Zusammensetzung mit einer Isocyanat-Funktionalität von mindestens 4, die mit einem Verfahren hergestellt wird, wobei man ein Polyisocyanat-Addukt, das
a) aus einem aliphatischen und/oder cycloaliphatischen Diisocyanat hergestellt wird,
b) eine Isocyanat-Durchschnittsfunktionalität von mindestens 2,5 aufweist und
c) Isocyanuratgruppen enthält,
mit einem sekundären Monoamin bei einem Isocyanat-zu-Amin-Äquivalentverhältnis von ca. 4:1 bis ca. 14:1 reagieren lässt, um Biuretgruppen in das genannte Polyisocyanat einzuführen

2. Zusammensetzung gemäß Anspruch 1, worin das genannte Addukt eine Isocyanat-Durchschnittsfunktionalität von mindestens 2,8 und nicht mehr als 8 aufweist.

3. Zusammensetzung gemäß Anspruch 2, worin das genannte Addukt eine Isocyanat-Durchschnittsfunktionalität von mindestens 3,0 und nicht mehr als 6 aufweist.

4. Zusammensetzung gemäß Anspruch 1, worin das genannte Addukt einen NCO-Gehalt von 10 bis 25 Gew.% aufweist.

5. Zusammensetzung gemäß Anspruch 1, worin die Komponente a) ein aliphatisches Diisocyanat ist.

6. Zusammensetzung gemäß Anspruch 1, worin das genannte Monoamin die Formel aufweist:
(R₁) (R₂)NH,
worin R₁ und R₂, gleich oder verschieden, einen aliphatischen Kohlenwasserstoffrest mit 1 bis 20 Kohlenstoffatomen darstellen.

7. Zusammensetzung gemäß Anspruch 6, worin das genannte Monoamin Dibutylamin ist.

8. Blockierte Biuretgruppen enthaltende Polyisocyanat-Zusammensetzung mit einer Isocyanat-Funktionalität von mindestens 4, die mit einem Verfahren hergestellt wird, wobei man:
A) ein Polyisocyanat-Addukt, das
a) aus einem aliphatischen und/oder cycloaliphatischen Diisocyanat hergestellt wird,
b) eine Isocyanat-Durchschnittsfunktionalität von mindestens 2,5 aufweist, und
c) Isocyanuratgruppen enthält,
mit einem sekundären Monoamin bei einem Isocyanatzu-Amin-Äquivalentverhältnis von ca. 4:1 bis ca. 14:1 reagieren lässt, um Biuretgruppen in das genannte Polyisocyanat einzuführen, und man
B) das Biuret-haltige Polyisocyanat mit einem Blockiermittel reagieren lässt.

9. Zusammensetzung gemäß Anspruch 8, worin das genannte Addukt eine Isocyanat-Durchschnittsfunktionalität von mindestens 2,8 und nicht mehr als 8 aufweist.

10. Zusammensetzung gemäß Anspruch 9, worin das genannte Addukt eine Isocyanat-Durchschnittsfunktionalität von mindestens 3,0 und nicht mehr als 6 aufweist.

11. Zusammensetzung gemäß Anspruch 8, worin das genannte Addukt einen NCO-Gehalt von 10 bis 25 Gew.-% aufweist.

12. Zusammensetzung gemäß Anspruch 8, worin die Komponente a) ein aliphatisches Diisocyanat ist.

13. Zusammensetzung gemäß Anspruch 8, worin das genannte Monoamin die Formel aufweist:
(R₁) (R₂)NH,
worin R₁ und R₂, gleich oder verschieden, einen aliphatischen Kohlenwasserstoffrest mit 1 bis 20 Kohlenstoffatomen darstellen.

14. Zusammensetzung gemäß Anspruch 13, worin das genannte Monoamin Dibutylamin ist.

15. Zusammensetzung gemäß Anspruch 8, worin das genannte Blockiermittel aus der Gruppe ausgewählt ist, bestehend aus Phenol, Kresol, langkettigen aliphatischen substituierten Phenolen, Amiden, Oximen, Hydrazonen und aus Pyrazolen.

16. Zusammensetzung gemäß Anspruch 15, worin das genannte Blockiermittel aus der Gruppe ausgewählt ist, bestehend aus Dimethylpyrazol, ε-Caprolactam und aus Methylethylketoxim.

## Revendications

1. Composition de polyisocyanate contenant un groupe biuret présentant une fonctionnalité isocyanate d'au moins 4 préparée par un procédé comprenant la réaction d'un produit d'addition de polyisocyanate qui,
a) est préparé à partir d'un diisocyanate aliphatique et/ou cycloaliphatique,
b) présente une fonctionnalité isocyanate moyenne d'au moins 2,5, et
c) qui contient des groupes isocyanurate,
avec une monoamine secondaire à un rapport d'équivalent isocyanate à amine d'environ 4:1 à environ 14:1 pour incorporer des groupes biuret dans ledit polyisocyanate.

2. Composition selon la revendication 1, dans laquelle ledit produit d'addition présente une fonctionnalité isocyanate moyenne d'au moins 2,8 et d'au plus 8.

3. Composition selon la revendication 2, dans laquelle ledit produit d'addition présente une fonctionnalité isocyanate moyenne d'au moins 3,0 et d'au plus 6.

4. Composition selon la revendication 1, dans laquelle ledit produit d'addition présente une teneur en NCO de 10 à 25 % en poids.

5. Composition selon la revendication 1, dans laquelle le constituant a) est un diisocyanate aliphatique.

6. Composition selon la revendication 1, dans laquelle ladite monoamine est de la formule :
(R₁)(R₂)NH,
où R₁ et R₂ peuvent être identiques ou différents et représentent un radical hydrocarboné aliphatique contenant de 1 à 20 atomes de carbone.

7. Composition selon la revendication 6, dans laquelle ladite monoamine est la dibutylamine.

8. Composition de polyisocyanate contenant un groupe biuret bloqué présentant une fonctionnalité isocyanate d'au moins 4 préparée par un procédé comprenant :
A) la réaction d'un produit d'addition de polyisocyanate qui
a) est préparé à partir d'un diisocyanate aliphatique et/ou cycloaliphatique,
b) présente une fonctionnalité isocyanate moyenne d'au moins 2,5, et
c) qui contient des groupes isocyanurate,
avec une monoamine secondaire à un rapport d'équivalent isocyanate à amine d'environ 4:1 à environ 14:1 pour incorporer des groupes biuret dans ledit polyisocyanate, et
B) la réaction du polyisocyanate contenant un groupe biuret avec un agent bloquant.

9. Composition selon la revendication 8, dans laquelle ledit produit d'addition présente une fonctionnalité isocyanate moyenne d'au moins 2,8 et d'au plus 8.

10. Composition selon la revendication 9, dans laquelle ledit produit d'addition présente une fonctionnalité isocyanate moyenne d'au moins 3,0 et d'au plus 6.

11. Composition selon la revendication 8, dans laquelle ledit produit d'addition présente une teneur en NCO de 10 à 25 % en poids.

12. Composition selon la revendication 8, dans laquelle le constituant a) est un diisocyanate aliphatique.

13. Composition selon la revendication 8, dans laquelle ladite monoamine est de la formule :
(R₁)(R₂)NH,
où R₁ et R₂ peuvent être identiques ou différents et représentent un radical hydrocarboné aliphatique contenant de 1 à 20 atomes de carbone.

14. Composition selon la revendication 13, dans laquelle ladite monoamine est la dibutylamine.

15. Composition selon la revendication 8, dans laquelle ledit agent bloquant est choisi parmi le phénol, le crésol, des phénols substitués par une longue chaîne aliphatique, des amides, des oximes, des hydrazones et des pyrazoles.

16. Composition selon la revendication 15, dans laquelle ledit agent bloquant est choisi parmi le diméthylpyrazole, l'ε-caprolactame et la méthyléthylcétoxime.
